# FASCICULE DE BREVET EUROPEEN

(11) **EP 2 417 337 B1**
(45) Date de publication et mention de la délivrance du brevet: **29.01.2014**
(21) Numéro de dépôt: 10723237.3
(22) Date de dépôt: 09.04.2010
(51) Int. Cl.: F01P 7/16, B60K 11/02, B60K 1/00, B60L 11/18

(54) **DISPOSITIF DE REFROIDISSEMENT POUR VÉHICULE AUTOMOBILE**
KÜHLSYSTEM FÜR EIN KRAFTFAHRZEUG
COOLING SYSTEM FOR MOTOR VEHICLE

(30) Priorité: 09.04.2009 FR 0952362
(43) Date de publication de la demande: 15.02.2012
(73) Titulaire: Renault S.A.S., 92100 Boulogne-Billancourt (FR)
(72) Inventeur: OBERTI, Claire, F-75014 Paris (FR); MARSILIA, Marco, F-92100 Boulogne Billancourt (FR); CREGUT, Samuel, F-78470 Saint-remy-les-chevreuse (FR)
(86) Numéro de dépôt international: PCT/FR2010/050687
(87) Numéro de publication internationale: WO 2010/116104

(56) Documents cités:
- EP-A- 1 942 038
- EP-A- 1 965 489
- DE-A1- 3 024 209
- DE-A1- 19 542 125
- US-A1- 2008 060 589
- US-B1- 6 662 761
- US-B2- 6 745 726
- US-B2- 7 000 685

## Description

L'invention a pour objet un dispositif de refroidissement pour véhicule automobile, comprenant un circuit de refroidissement apte à refroidir un ensemble moteur à l'aide d'un liquide de refroidissement mis en circulation par au moins une pompe à débit variable. L'invention s'applique avantageusement aux véhicules automobiles électriques.

Dans un moteur à combustion interne, les combustions répétées surchauffent les pièces en contact, comme par exemple les pistons, les cylindres, et les soupapes, et se diffusent sur l'ensemble des pièces mécaniques du moteur. Il faut donc les refroidir sous peine de destruction. Pour un bon fonctionnement, les moteurs à explosion ont ainsi besoin d'une température régulière et adaptée.

Dans le cas d'un véhicule à propulsion électrique, il est également nécessaire de refroidir les différents éléments de la chaîne de traction.

Il est connu d'utiliser un système de refroidissement comprenant une ou plusieurs pompes permettant de faire circuler un liquide de refroidissement à travers le moteur, ainsi qu'un radiateur, qui est un échangeur de température permettant de refroidir le liquide. Dans ce cas, le débit de liquide de refroidissement est fonction du régime moteur, et est en particulier nul lorsque le moteur est arrêté. Le document DE19542125A décrit un dispositif selon le préambule de revendication 1.

Il apparaît souhaitable de disposer d'un dispositif de refroidissement permettant d'optimiser le fonctionnement des pompes, et notamment de limiter leur usure et leur consommation en énergie.

Le dispositif selon l'invention permet d'atteindre cet objectif.

L'invention a ainsi pour objet un dispositif de refroidissement pour véhicule automobile selon la revendication 1.

Ainsi, l'asservissement du débit de chaque pompe en boucle fermée permet de limiter son usure et sa consommation d'énergie.

La température de consigne peut être prédéterminée en fonction de la température à l'extérieur du véhicule et de la vitesse du véhicule.

A cet effet, le dispositif peut comprendre une première vanne apte à empêcher un passage de liquide de refroidissement dans l'ensemble chargeur et une deuxième vanne apte à empêcher un passage de liquide de refroidissement dans l'ensemble moteur.

Le dispositif peut également comprendre une restriction hydraulique permettant de maintenir un débit minimum de liquide de refroidissement dans l'ensemble moteur.

Le système de régulation en boucle fermée peut comprendre un correcteur de type proportionnel-intégral.

Le correcteur peut comprendre un bloc de saturation apte à limiter la correction entre une valeur minimum et une valeur maximum.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 illustre sous forme de schéma-blocs un dispositif de refroidissement selon l'invention, intégré à un véhicule électrique,
- la figure 2 illustre sous forme de schéma-blocs une stratégie de commande du dispositif, et
- la figure 3 est une vue de détail d'un bloc de la figure 2.

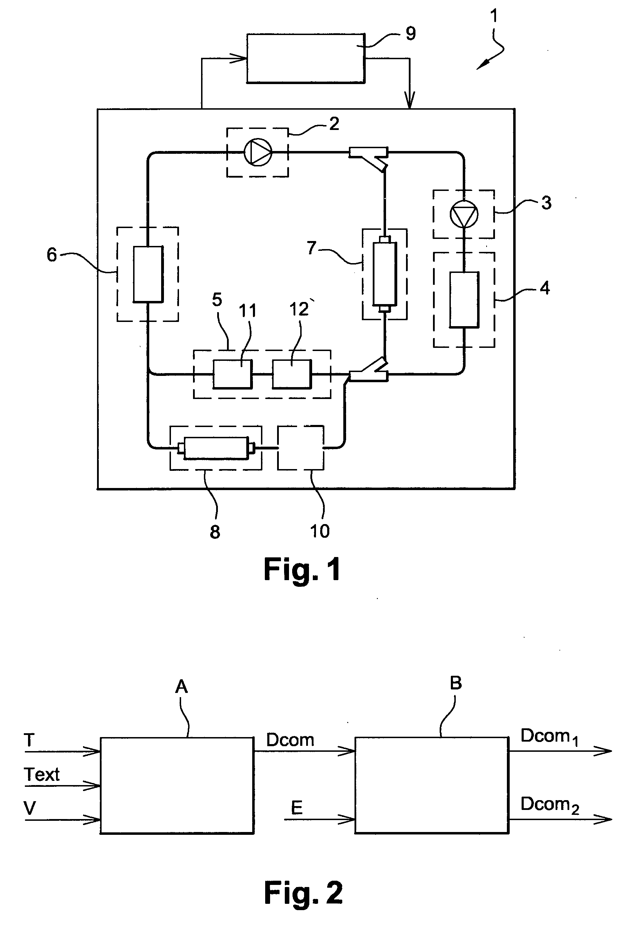

Le dispositif de refroidissement 1, tel qu'illustré à la figure 1, comprend une première pompe électrique 2, une deuxième pompe électrique 3, un chargeur 4 de batterie, un ensemble moteur 5, un radiateur 6, ainsi qu'une première électrovanne 7 et une deuxième électrovanne 8. La première pompe électrique 2, la deuxième pompe électrique 3, la première électrovanne 7 et la deuxième électrovanne 8 sont reliées à un dispositif de commande 9.

La première pompe électrique 2 est destinée à être utilisée lors du roulage du véhicule, tandis que la deuxième pompe électrique 3 est destinée à être utilisée lors de la recharge de la batterie. Le débit de la première pompe 2 et le débit de la deuxième pompe 3 peuvent être réglés à l'aide d'un signal de commande.

Le chargeur 4 permet, lorsque le véhicule est à l'arrêt, de recharger la batterie électrique de traction, non représentée, à partir du réseau électrique domestique.

La première électrovanne 7 permet de court-circuiter la deuxième pompe 3 et le chargeur 4, lors du roulage du véhicule, tandis que la deuxième électrovanne 8 permet de court-circuiter l'ensemble moteur 5 lors du chargement de la batterie, lorsqu'on estime que le refroidissement de l'ensemble moteur 5 n'est pas nécessaire. La deuxième électrovanne 8 peut être reliée à une restriction hydraulique 10 qui permet de réaliser une perte de charge, et de conserver ainsi un débit de liquide de refroidissement dans l'ensemble moteur 5, même lorsque la deuxième électrovanne 8 est passante.

L'ensemble moteur 5 comprend un moteur 11 et un système électronique de pilotage 12 destiné notamment à transformer la tension continue de la batterie en tension alternative.

Le radiateur 6 permet de refroidir le liquide de refroidissement, de manière similaire au dispositif de refroidissement d'un moteur à combustion interne. Il est équipé d'un moto-ventilateur, non représenté.

Il est nécessaire de refroidir l'ensemble moteur 5 lors du roulage du véhicule, ainsi que le chargeur 4 lorsque le véhicule est à l'arrêt. La stratégie de refroidissement est gérée par le dispositif de commande 9. Le dispositif de commande 9 est un calculateur qui est en liaison avec des capteurs du circuit de refroidissement, en particulier des capteurs de température du liquide de refroidissement. Le calculateur 9 pilote les pompes 2,3, les électrovannes 7,8, ainsi que le groupe moto-ventilateur du radiateur 6. Le calculateur 9 est en outre avantageusement relié à d'autres calculateurs du véhicule, via un réseau de type bus CAN (Controller Area Network en langue anglais) par exemple, afin d'obtenir d'autres mesures nécessaires à la stratégie de refroidissement.

La stratégie de commande du circuit de refroidissement peut être réalisée sous la forme de deux modules A, B, tel qu'illustré à la figure 2. Le module A concerne la régulation de la température du liquide de refroidissement, tandis que le module B concerne le choix de la pompe électrique 2, 3.

Le module A est chargé d'élaborer une commande de débit de liquide de refroidissement selon l'état du véhicule (roulage ou recharge de la batterie à l'arrêt). Les entrées du module A sont :
- la température T du liquide de refroidissement : elle peut être obtenue à l'aide d'un ou plusieurs capteurs de température,
- la température Tₑₓₜ à l'extérieur du véhicule, et
- la vitesse V du véhicule.

Les entrées du module B sont :
- la commande de débit D_{com} issue du module A, et
- l'état E du véhicule : c'est un signal en provenance du calculateur central de la voiture qui vaut 1 si on est en mode recharge de la batterie du véhicule et qui vaut 0 si on est en mode roulage.

Les sorties du module B sont :
- la commande du débit D_{com1} de la première pompe, utilisée en mode roulage. Il s'agit d'un signal compris entre 0 et 100 et exprimant le pourcentage du débit maximum pouvant être réalisé par la pompe, et
- la commande du débit D_{com2} de la deuxième pompe, utilisée en mode recharge. Il s'agit d'un signal compris entre 0 et 100 et exprimant le pourcentage du débit maximum pouvant être réalisé par la pompe.

De manière simple, on peut choisir de n'utiliser que la deuxième pompe si le signal de l'état du véhicule vaut 1 et de n'utiliser que la première pompe si le signal de l'état du véhicule vaut 0.

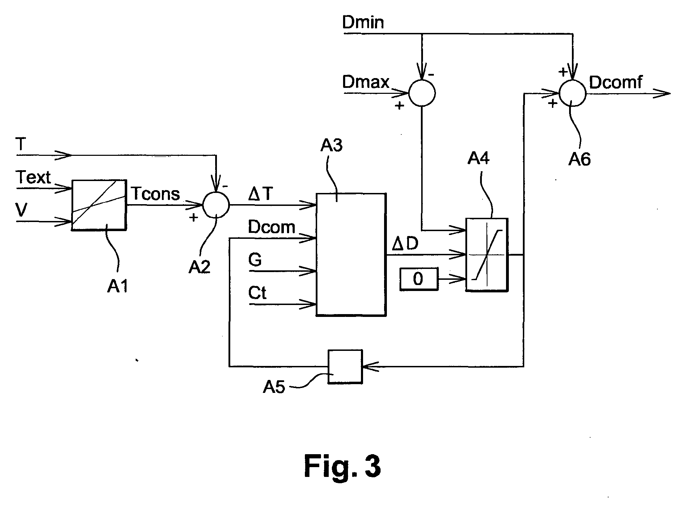

Un mode de réalisation de la commande de débit est illustré en détail sur la figure 3. L'objectif est de faire varier automatiquement la commande de débit entre une valeur minimum de débit Dₘᵢₙ et une valeur maximum de débit Dₘₐₓ, en fonction de la température du liquide de refroidissement. Tant que la température du liquide de refroidissement est inférieure à une température de consigne, la commande de débit reste à la valeur minimale Dₘᵢₙ. Dès que la température du liquide de refroidissement dépasse la température de consigne, la commande de débit est obtenue par régulation en boucle fermée, la consigne considérée étant la température de consigne, et la boucle de réaction considérée étant la température mesurée du liquide de refroidissement.

Cet objectif est atteint grâce aux blocs A1 à A6 du module A.

Le bloc A1 élabore la valeur de consigne de température T_{cons} du liquide de refroidissement en fonction de la température Tₑₓₜ à l'extérieur du véhicule et de la vitesse V du véhicule. En effet, plus la vitesse V du véhicule est grande, et plus la capacité du radiateur à refroidir est grande, et donc plus il est possible d'augmenter la valeur de consigne de température T_{cons}. De la même façon, plus la température extérieure Tₑₓₜ est froide, et plus l'efficacité du radiateur est grande et donc plus il est possible d'augmenter la valeur de consigne de température T_{cons}. Le bloc A1 réalise ainsi la valeur de consigne de température T_{cons} par interpolation linéaire à partir de cartographies.

Le bloc A2 élabore ensuite un signal d'erreur ΔT qui est la différence entre la température de consigne T_{cons} et la température mesurée T. Le signal ΔT est envoyé au bloc A3 qui est un bloc correcteur PI (proportionnel-intégral), bien connu de l'homme du métier. On pourrait toutefois utiliser également un correcteur de type proportionnel ou un correcteur de type intégral.

Les entrées du bloc A3 sont :
- le signal d'erreur ΔT issu du bloc A2,
- la commande de débit D_{com} envoyée à l'instant d'échantillonnage précédent ; si la commande est saturée à la valeur Dₘᵢₙ ou à la valeur Dₘₐₓ, le correcteur en est informé et l'action intégrale est elle aussi saturée,
- le gain proportionnel G du correcteur PI, par exemple 1%,
- la constante de temps Ct intégrale du correcteur PI, par exemple 500s.

La sortie du bloc A3 correspond à l'augmentation ΔD souhaitée de débit par rapport au débit minimum Dₘᵢₙ. Cette commande doit être saturée.

Le bloc A4 réalise cette saturation, entre 0 (pas d'augmentation de débit souhaitée) et Dₘₐₓ - Dₘᵢₙ. Cette commande saturée est ensuite mémorisée par le bloc de retard A5 qui permet, à l'instant d'échantillonnage suivant, d'informer le correcteur PI d'une éventuelle saturation.

Enfin, le bloc A6 réalise la commande finale D_{comf} de débit. La commande finale D_{comf} est calculée en ajoutant à la valeur Dₘᵢₙ la variation ΔD demandée par le correcteur PI.

On réussit ainsi à faire évoluer automatiquement la commande de débit entre les deux valeurs Dₘᵢₙ et Dₘₐₓ. La valeur Dₘᵢₙ peut par exemple être réglée à 30% du débit maximum pouvant être réalisé par la pompe. Il est en effet judicieux de conserver un débit minimal Dₘᵢₙ non nul, même si la température est faible, pour obtenir une température homogène le long du circuit du liquide de refroidissement et éviter ainsi la formation de points chauds. La valeur Dₘₐₓ peut être réglée à 80% du débit maximum, par exemple si on ne souhaite pas trop solliciter la pompe.

La stratégie de commande du débit de liquide de refroidissement est ainsi particulièrement simple à mettre en oeuvre sur un calculateur. Elle est peu exigeante en temps de calcul et permet de réduire la consommation électrique.

Bien que le dispositif décrit ci-dessus comprenne deux pompes, l'invention peut également concerner un dispositif comprenant une ou plus de deux pompes. Elle peut également s'appliquer à un moteur à essence équipé de pompes à eau électriques.

## Revendications

1. Dispositif de refroidissement (1) pour véhicule automobile électrique comprenant un ensemble chargeur (4) de batterie, comprenant un circuit de refroidissement apte à refroidir l'ensemble chargeur (4) et un ensemble moteur (5) comprenant un système électronique de pilotage (12) à l'aide d'un liquide de refroidissement mis en circulation à l'aide d'au moins une pompe (2,3) à débit variable, le débit de chaque pompe (2,3) étant commandé par un système de commande (9), le système de commande (9) étant apte à asservir le débit de chaque pompe (2,3) dans un système de régulation en boucle fermée en fonction de la température du liquide de refroidissement et d'une température de consigne, **caractérisé en ce qu'**il comprend une première pompe (2) apte à alimenter sélectivement en liquide de refroidissement l'ensemble moteur (5) et une deuxième pompe (3) apte à alimenter sélectivement en liquide de refroidissement l'ensemble chargeur (4)..

2. Dispositif (1) selon la revendication 1, **caractérisé en ce que** la température de consigne est prédéterminée en fonction de la température à l'extérieur du véhicule et de la vitesse du véhicule.

3. Dispositif (1) selon la revendication 1 ou 2, **caractérisé en ce qu'**il comprend une première vanne (7) apte à empêcher un passage de liquide de refroidissement dans l'ensemble chargeur (4) et une deuxième vanne (8) apte à empêcher un passage de liquide de refroidissement dans l'ensemble moteur (5).

4. Dispositif (1) selon la revendication 3, **caractérisé en ce qu'**il comprend une restriction hydraulique (10) permettant de maintenir un débit minimum de liquide de refroidissement dans l'ensemble moteur (5).

5. Dispositif (1) selon l'une des revendications 1 à 4, **caractérisé en ce que** le système de régulation en boucle fermée comprend un correcteur de type proportionnel-intégral.

6. Dispositif (1) selon l'une des revendications 1 à 5, **caractérisé en ce que** le correcteur comprend un bloc de saturation apte à limiter la correction entre une valeur minimum et une valeur maximum.

## Patentansprüche

1. Kühlvorrichtung (1) für ein Elektrokraftfahrzeug, das eine Batterieaufladeeinheit (4) umfasst, umfassend einen Kühlkreislauf, der geeignet ist, die Aufladeeinheit (4) und eine Motorbaugruppe (5) zu kühlen, die ein elektronisches System (12) zum Steuern mit Hilfe einer Kühlflüssigkeit umfasst, die mit Hilfe mindestens einer Verstellpumpe (2, 3) zirkuliert wird, wobei die Förderleistung jeder Pumpe (2, 3) durch ein Steuersystem (9) gesteuert ist, das geeignet ist, die Förderleistung jeder Pumpe (2, 3) in Abhängigkeit von der Temperatur der Kühlflüssigkeit und einer Solltemperatur in einem Regelsystem in geschlossener Schleife zu regeln, **dadurch gekennzeichnet, dass** sie eine erste Pumpe (2), die geeignet ist, die Motorbaugruppe (5) selektiv mit Kühlflüssigkeit zu versorgen, und eine zweite Pumpe (3), die geeignet ist, die Aufladeeinheit (4) selektiv mit Kühlflüssigkeit zu versorgen, umfasst.

2. Vorrichtung (1) nach Anspruch 1, **dadurch gekennzeichnet, dass** die Solltemperatur in Abhängigkeit von der Fahrzeugaußentemperatur und der Fahrzeuggeschwindigkeit vorbestimmt ist.

3. Vorrichtung (1) nach Anspruch 1 oder 2, **dadurch gekennzeichnet, dass** sie ein erstes Ventil (7) umfasst, das geeignet ist, eine Passage von Kühlflüssigkeit in die Aufladeeinheit (4) zu verhindern, und ein zweites Ventil (8), das geeignet ist, eine Passage von Kühlflüssigkeit in die Motorbaugruppe (5) zu verhindern.

4. Vorrichtung (1) nach Anspruch 3, **dadurch gekennzeichnet, dass** sie eine hydraulische Drossel (10) umfasst, die es erlaubt, einen Mindestdurchfluss an Kühlflüssigkeit in der Motorbaugruppe (5) aufrechtzuerhalten.

5. Vorrichtung (1) nach einem der Ansprüche 1 bis 4, **dadurch gekennzeichnet, dass** das Regelsystem in geschlossener Schleife einen Proportional-Integral-Regler umfasst.

6. Vorrichtung (1) nach einem der Ansprüche 1 bis 5, **dadurch gekennzeichnet, dass** der Regler eine Sättigungseinheit umfasst, die geeignet ist, die Regelung zwischen einem Minimalwert und einem Maximalwert einzugrenzen.

## Claims

1. Cooling device (1) for an electric automotive vehicle, including a battery charger assembly (4), comprising a cooling circuit capable of cooling the charger assembly (4) and an engine assembly (5) including an electronic driver system (12) using a coolant circulated using at least one variable flow rate pump (2, 3), the flow rate of each pump (2, 3) being controlled by a control system (9), the control system (9) being able to servo-control the flow rate of each pump (2, 3) in a closed-loop regulation system according to the temperature of the coolant and a setpoint temperature, **characterized in that** it comprises a first pump (2) capable of selectively supplying coolant to the engine assembly (5) and a second pump (3) capable of selectively supplying coolant to the charger assembly (4).

2. Device (1) according to Claim 1, **characterized in that** the setpoint temperature is predetermined according to the temperature outside the vehicle and the speed of the vehicle.

3. Device (1) according to Claim 1 or 2, **characterized in that** it includes a first valve (7) capable of preventing a flow of coolant in the charger assembly (4) and a second valve (8) capable of preventing a flow of coolant in the engine assembly (5).

4. Device (1) according to Claim 3, **characterized in that** it includes a hydraulic restriction (10) for maintaining a minimum flow rate of coolant in the engine assembly (5).

5. Device (1) according to one of Claims 1 to 4, **characterized in that** the closed-loop regulation system includes a corrector of proportional-integral type.

6. Device (1) according to one of Claims 1 to 5, **characterized in that** the corrector includes a saturation block capable of limiting the correction between a minimum value and a maximum value.
